# EUROPEAN PATENT APPLICATION

(11) **EP 1 898 406 A2**
(43) Date of publication of application: **12.03.2008**
(21) Application number: 07114224.4
(22) Date of filing: 13.08.2007
(51) Int. Cl.: G11B 7/24, G11B 7/005, G11B 7/243

(54) **Optical disc, optical disk device and optical disk reproducing method**

(30) Priority: 31.08.2006 JP 2006236814
(71) Applicant: Kabushiki Kaisha Toshiba, Minato-ku, Tokyo 105-8001 (JP)
(72) Inventor: Ootera, Yasuaki Toshiba Corporation IPD, Tokyo 105-8001 (JP); Yoshida, Nobuhisa Toshiba Corporation IPD, Tokyo 105-8001 (JP); Nakamura, Naomasa Toshiba Corporation IPD, Tokyo 105-8001 (JP)
(74) Representative: Henkel, Feiler & Hänzel

(57) **Abstract**

Disclosed is an optical disc in which information is recorded by a pit pattern and which includes a reflection membrane. When concavities and convexities of the pits are opposite to those of a usual case, the reflection membrane is formed on the pits in the form of a two-layer membrane of silver or a silver alloy and aluminum or an aluminum alloy. The reflection membrane is formed with a two-layer structure including a first layer (50) and a second layer (52) different from the first layer (50). The material of the first layer (50) is aluminum, an aluminum alloy or aluminum oxide. The second layer (52) contacts the first layer and its material is silver or a silver alloy.

## Description

The invention relates to a multi-layer optical disc such as a CD, a DVD, a BD (a blue-ray disc) or an HD DVD which is capable of recording information therein. In addition, the invention relates to an optical disc device for reproducing the multi-layer optical disc.

In recent years, optical discs such as CDs and DVDs are usually used as media for recording digitized information therein. Among these media, the DVDs (or HD DVDs whose standardization is being advanced as next-generation optical discs) have a disc structure in which two plastic substrates are bonded. Therefore, the achievement of a large capacity of the DVDs can easily be made by bonding two information recording layers.

To equalize reflectances of both the layers to a blue laser, some of such single-sided two-layer discs use silver or a silver alloy for a semipermeable or semitransparent membrane of a proximal layer as seen from an optical pickup head side for reproducing information, and aluminum or an aluminum alloy for a total reflection membrane of a distal layer (see Jpn. Pat. Appln. KOKAI Publication No. 2004-355701).

To meet the demand of a further large capacity of the DVDs, the development of a multilayer structure of three or more layers has been advanced. Particularly in some types of reproduction-only optical discs of the three or more layers, concavities and convexities of pits are opposite to those of a usual case. In such a case, a problem has appeared that signal properties noticeably deteriorate when a semipermeable or semitransparent membrane is made of silver as described in the above column of "Description of the Related Art".

Such a problem has been avoided by further inverting the concavities and convexities of the pits, or by using aluminum as the semipermeable or semitransparent membrane. However, when the concavities and convexities are inverted, there is a problem that molding is difficult. In addition, the aluminum semipermeable (or semitransparent) membrane is poor in permeability, and it is thin, so that durability is poor. After all, the above problem has not been solved.

The invention has been developed to solve the above problem, and provides an optical disc in which when the concavities and convexities of the pits are opposite to those of the usual case, a reflection membrane is formed thereon in the form of a two-layer membrane of silver (or a silver alloy) and aluminum (or an aluminum alloy), and an optical disc device using the optical disc.

To solve the above problem, the embodiment is characterized by an optical disc in which information is recorded by a pattern of pits and which includes a reflection membrane, the reflection membrane being formed with a two-layer structure of a first layer and a second layer different from the first layer.

According to the invention, when the concavities and convexities of the pits are opposite to those of the usual case, a reflection membrane is formed thereon in the form of a two-layer membrane of silver (or a silver alloy) and aluminum (or an aluminum alloy), which can realize the reflection membrane having both the merits of excellent adhesive properties of the membrane to the pits due to the properties of aluminum, and excellent durability due to the properties of silver which has an excellent permeability and can thicken the membrane. Furthermore, these materials can easily be introduced into disc manufacturing apparatuses in current use, and the invention is suitable for the mass-production of the optical discs.

The invention can be more fully understood from the following detailed description when taken in conjunction with the accompanying drawings, in which:
FIG. 1 is an exemplary view showing a structure of a single-sided three-layer disc of multi-layer discs according to an embodiment of the invention;
FIG. 2 is an exemplary view showing a process of a manufacturing method of the single-sided three-layer disc;
FIG. 3 is an exemplary view showing a structure of a reflection membrane according to the invention;
FIG. 4 is an exemplary view showing effects of the reflection membrane according to the invention;
FIG. 5 is a block diagram showing a schematic constitution of an optical disc device for reproducing the optical disc;
FIG. 6 is an exemplary flowchart explaining a recording method using the optical disc according to the one embodiment of the invention;
FIG. 7 is an exemplary flowchart explaining a reproducing method using the optical disc according to the one embodiment of the invention;
FIG. 8 is an exemplary view showing a practical example of a metal complex part of an organic material for an L0 layer; and
FIGS. 9A, 9B, and 9C are exemplary views showing practical examples of dye parts of the organic material for the L0 layer.

Various embodiments according to the invention will be described hereinafter with reference to the accompanying drawings.

Now, an embodiment the invention will be described in detail with reference to the drawings.

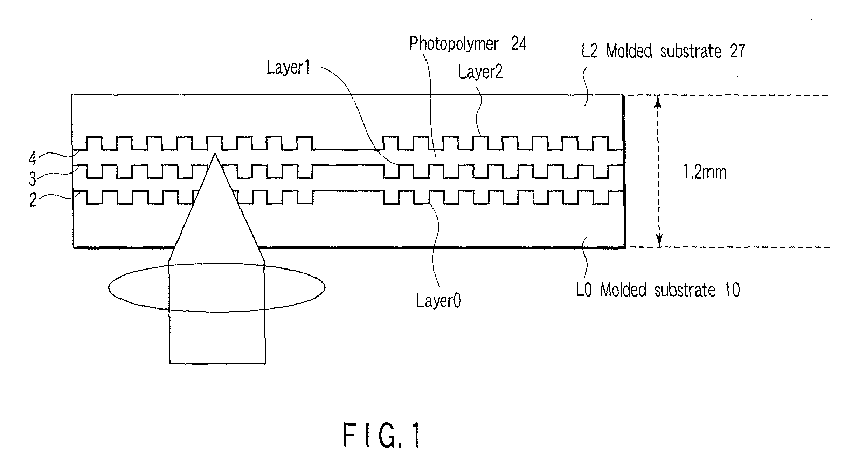

FIG. 1 is an exemplary view showing a structure of a single-sided three-layer disc of multi-layer discs according to an embodiment of the invention. One example shown in FIG. 1 is a single-sided three-layer HD DVD reproduction-only disc. This disc is characterized in that pit patterns 2 and 4 of a Layer 0 (L0) and a Layer 2 (L2) in which information is recorded are formed on molded substrates 10 and 27, respectively, and a pit pattern 3 of a Layer 1 (L1) is formed on a photopolymer 24. A reproduction light is applied at a wavelength of 405 nm from a lower side in FIG. 1 to the layers by use of an optical system of NA 0.65.

On each information recording layer, pits having a minimum diameter of 0.204 µm are formed at a track pitch of 0.40 µm in a spiral shape. The disc has an external diameter of 120 mm, an internal diameter of 15 mm, and a total thickness of 1.2 mm ± 0.03 mm, which are the same as those of the CD or DVD (or HD DVD or BD).

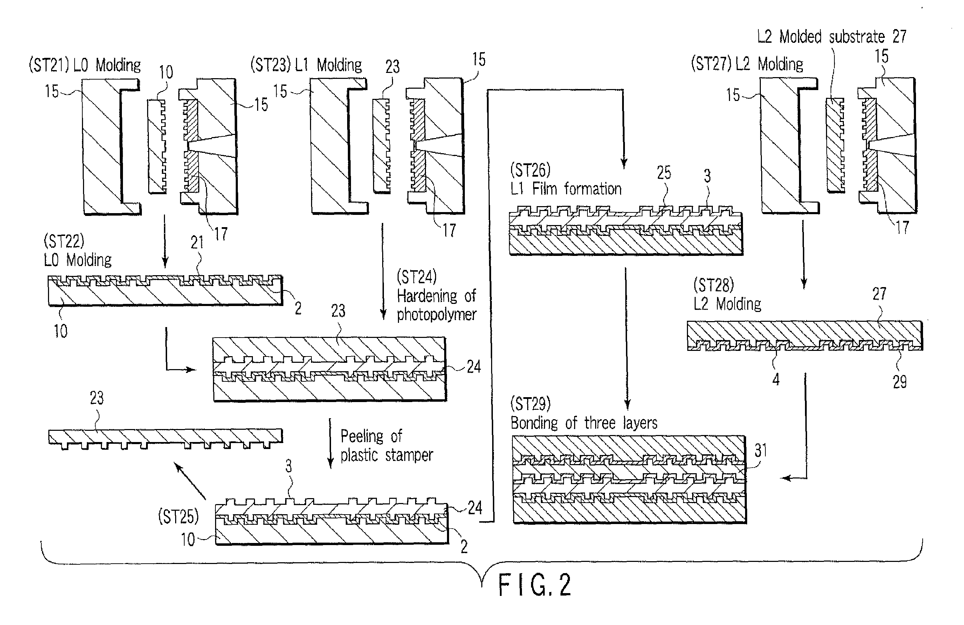

The optical disc which is handled in the invention noticeably exerts its effect in a case where the optical disc has a layer in which tips (convexities) of a pit pattern (the pointing direction of the tips of the pits) face the side of the reflection membrane. For example, in the embodiment of FIG. 1, the above layer corresponds to the Layer 1 (L1), which will be described in detail with regard to FIG. 2. However, the present embodiment does not intend to limit to the installation of the layer in which the information is recorded by the pit pattern. Examples of the optical disc having the above layer include discs having two and less as well as four and more information recording layers, high-density and low-density discs, discs having small diameters (e.g., 80 cm), double-sided discs, and optical discs of other systems such as BDs. Above all, examples which are applicable to the invention other than the single-sided three-layer HD DVDs include discs each having three layers of one DVD layer and two HD DVD layers, and discs each inversely having three layers of two DVD layers and one HD DVD layer (a kind of twin disc).

FIG. 2 is an exemplary view showing a process of a manufacturing method of the single-sided three-layer disc.

Next, the manufacturing method of the single-sided three-layer disc which is one example of the invention will be described with reference to FIG. 2. In this case, the same parts as in FIG. 1 are represented by the same reference numerals.

First, an L0 molded substrate 10 to which a Layer 0 (L0) is transferred is prepared from a mold 15 and an Ni stamper 17 by injection molding (ST21). This step is the same as in the case of usual monolayer and two-layer DVDs and HD DVDs. A molding material to be used is usually a polycarbonate, and the Ni stamper 17 which provides a stamp is prepared by making a master with the aid of lithography and then plating it. Afterward, on a pit pattern 2 of the L0 molded substrate 10 prepared in the ST21, a semipermeable (or semitransparent) reflection membrane 21 is formed (ST22).

Simultaneously, a plastic stamper 23 of the Layer 1 (L1) is similarly formed by the injection molding (ST23). The material of the plastic stamper 23 is usually a cycloolefin polymer, but alternatively, PMMA (polymethyl methacrylate) or a polycarbonate may be used. In the injection molding, the Ni stamper 17 is used as in the ST21, and as facilities such as a molding machine and the mold 15, devices for the usual DVDs are basically used. The thus prepared L0 molded substrate 10 and plastic stamper 23 are bonded to each other via the photopolymer 24, and then hardened by ultraviolet ray (ST24).

The photopolymer 24 is usually applied thereonto by spin coat, and this photopolymer layer functions as both a transfer layer of the pit pattern of the L1 and an intermediate layer which separates the Layer 0 (L0) and the Layer 1 (L1) from each other. After the hardening of the photopolymer, the plastic stamper 23 is peeled off (ST25). On the resultantly exposed pit pattern 3 (of the L1) formed on the photopolymer 24, a semitransparent membrane 25 is formed (ST26).

Simultaneously, the L2 molded substrate 27 to which the Layer 2 (L2) is transferred is prepared by the injection molding (ST27). The formation of the substrate is also usually made by using the polycarbonate and the Ni stamper 17, as in the case of the usual two-layer DVDs or HD DVDs. On the pit pattern 4 of the L2 molded substrate 27, a total reflection membrane 29 is formed (ST28). The thus prepared L2 molded substrate 27 is bonded onto the pit pattern 3 of the L1 via an ultraviolet hardening resin 31 (ST29). This is the same as in the case of a bonding step of the usual two-layer DVDs or HD DVDs, and the bonding layer is an intermediate layer for separating the Layer 1 (L1) and the Layer 2 (L2) from each other. In consequence, a single-sided three-layer disc is completed.

In the three-layer optical disc manufactured by the above method, the step of using the plastic stamper 23 of the Layer 1 (L1) is added. Therefore, the number of the transfer steps increases as much as one step, and usually, concavities and convexities of the finally formed pit pattern are opposite to those of the other layers. That is, tips (convexities) of the pit pattern of the Layer 1 (L1) faces the side of the reflection membrane.

Here, there arises one serious problem. In the semitransparent reflection membrane 25 on the recording pattern 3 of the L1, an excellent permeability is also demanded, and hence silver or a silver alloy is usually used as the material of the reflection membrane 25 in consideration of the easiness of the membrane formation. The Layer 1 (L1) is the second layer of the three layers, and therefore, if the semitransparent membrane of silver (or the silver alloy) is used for the reflection membrane to form the semitransparent membrane on the tips of the pit pattern, there arises a problem that the membrane does not securely contact (adhere to) the pit pattern.

The problem is noticeable when silver is used as the material of the reflection membrane. This is considered to be due to a phenomenon that agglomeration of silver increases during the membrane formation and the reflection membrane peels off from the pit pattern by the resultant tensile stress. To solve the problem, there may be used, for example, a technique of further increasing the number of the transfer steps by one step to invert the concavities and convexities of the pits, or a technique of using a material other than silver as the material of the reflection membrane. However, the increase in the number of the transfer steps by one step brings about the elongation of a production tact time, the deterioration of quality and yield, and the like, which remarkably impairs productivity. In addition, with regard to the material of the reflection membrane, the use of aluminum inhibits the above problem, but the permeability of aluminum is poor. Furthermore, when aluminum is used in a case of the Layer 1 of the three-layer HD DVD as in the present embodiment, an optical optimum membrane thickness is as thin as about 8 nm, durability such as storage stability is poor.

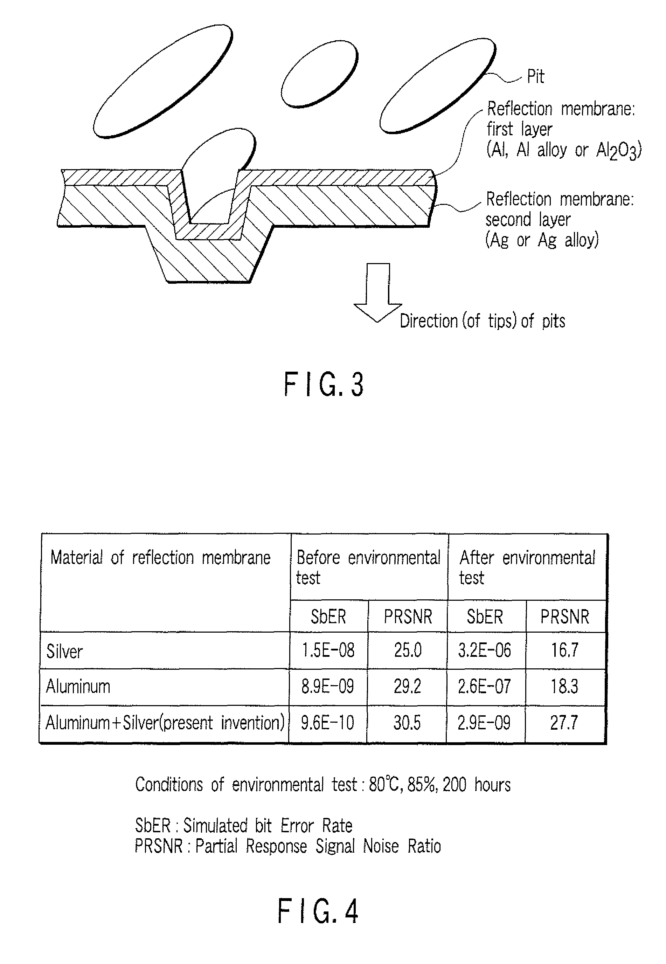

Thus, FIG. 3 is an exemplary view showing a structure of a reflection membrane according to the invention.

In FIG. 3, the reflection membrane is provided in a pointing direction of the tips (pointing direction of the convexities: downward direction in FIG. 3) of the pits, and the reflection membrane has a two-layer structure. The material of a layer (a first layer 50) which comes in direct contact with the pits is aluminum, an aluminum alloy or aluminum oxide, and the material of the next layer (a second layer 52) is silver or a silver alloy.

That is, in the invention, the pointing direction of the tips (convexities) of the pit pattern of the layer faces the side of the reflection membrane, and the reflection membrane is constituted in the form of two layers. The layer which closely contacts the pit pattern is made of aluminum (or its alloy or its oxide), and the other layer is made of silver (or its silver alloy). According to this constitution, the aluminum layer closely contacts the pattern, the reproduction quality of a signal from the aluminum layer can be improved. In addition, the aluminum layer can be formed to be extremely thin (10 nm or less and thinner than the silver layer), whereby the permeability can also be secured. The total thickness of the reflection membrane is increased by the silver layer, whereby durability such as storage stability is improved while the permeability is maintained.

Actually in the single-sided three-layer discs of the present embodiment, three kinds of reflection membranes of the Layer 1 were made of silver, aluminum, and a two-layer structure membrane of aluminum and silver (the reflection membrane of the invention), and signal properties thereof were measured and compared before and after environmental tests. The results are shown in FIG. 4.

In the measurement results shown in FIG. 4, a SbER (a simulated bit error rate) and a PRSNR (a partial response signal noise ratio) are indexes for representing the signal qualities. The SbER corresponds to an error rate, and hence it is better that the SbER is low, but the PRSNR corresponds to a signal noise ratio, and hence it is better that the PRSNR is high. As understood from FIG. 4, the aluminum reflection membrane is more excellent in signal quality than the silver reflection membrane. On the contrary, the two-layer structure reflection membrane of aluminum and silver obtains the excellent signal quality corresponding to that of the aluminum reflection membrane. In consideration of a fact that the aluminum reflection membrane is excellent in signal quality but poor in permeability and durability, it is understood that the two-layer structure membrane of aluminum and silver of the invention is excellent in all points in a well-balanced state.

In fact, FIG. 4 shows the values of the SbER and the PRSNR before and after the environmental tests (temperature 80°C, humidity 85%, and time 200H), and it has been verified that the two-layer structure reflection membrane of the invention less deteriorates and is more excellent in durability in the environmental tests as compared with the conventional silver reflection membrane and aluminum reflection membrane. It is to be noted that the improvement of the durability is exerted irrespective of the direction of the concavities and convexities of the pits.

In the present embodiment, the reflection membrane of the three-layer HD DVD-ROM disc is constituted with the Layer 0 (silver 14 nm), the Layer 1 (aluminum 4 nm + silver 17 nm) and the Layer 2 (aluminum 27 nm). Needless to say, this is one example, but every layer can secure a reflectance of 10% or more and a film thickness of 10 nm or more which means the excellent durability.

For the reflection membrane of the invention, there are employed silver and aluminum which are used in the current optical discs, and hence the technique of the invention is compatible with a current optical discs manufacturing line, and it is also useful that the technique is realized by slight reconstruction of an apparatus. In this connection, silver may be replaced with durable gold which is relatively expensive. If the installation of a new apparatus is allowable, the silver membrane may be replaced with a dielectric membrane (e.g., silicon) which is excellent in permeability and durability.

As understood from the above, also with regard to the optical disc having the layer in which the concavities and convexities of the pattern are opposed to those of the usual case by a disc multilayer process or the like, i.e., the pointing direction of the tips (convexities) of the pit pattern faces the side of the reflection membrane, the invention makes it possible that the reflection membrane can precisely and closely contact the pattern. Simultaneously, the permeability can be secured, and the suitable membrane thickness can be obtained to secure the durability irrespective of the direction of the concavities and convexities of the pattern.

Furthermore, in the invention, silver and aluminum which are usual disc reflection membrane materials can be used, and the invention can be carried out using a current optical discs manufacturing line substantially as it is, which means that the invention is excellent in manufacturing efficiency.

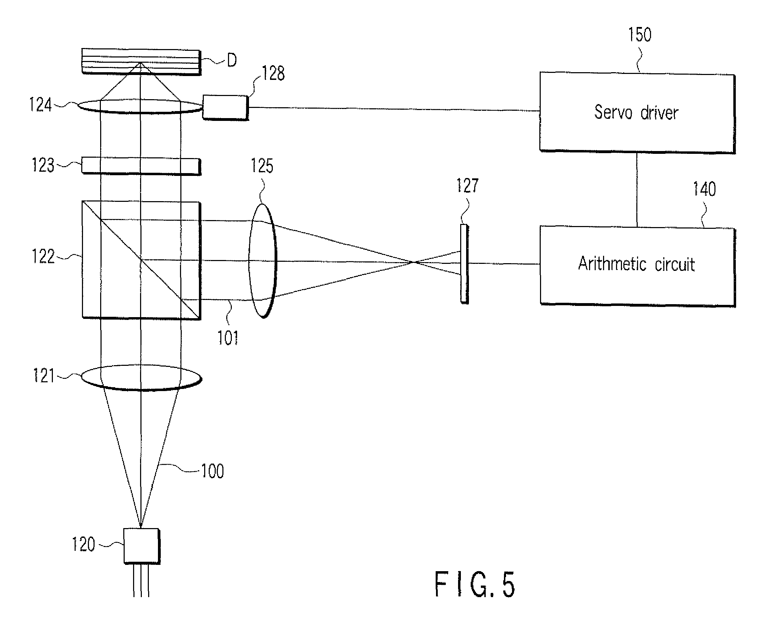

Next, an optical disc device for reproducing the information recorded in the above optical disc will be described. FIG. 5 is a block diagram showing a schematic constitution of an optical disc device for reproducing the optical disc. As shown in FIG. 5, an optical disc D is, for example, a single-sided three-layer disc shown in FIG. 1. As a light source, a semiconductor laser light source 120 of a short wavelength is used. A wavelength of the emitted light is in, for example, a violet wavelength band within a range of 400 nm to 410 nm. The emitted light 100 from the semiconductor laser light source 120 becomes a parallel light by a collimating lens 121, and the parallel light passes through a polarizing beam splitter 122 and a λ/4 plate 123, and enters an object lens 124. Afterward, the light passes through the optical disc D, and is then condensed on each information recording layer. A reflected light 101 which is reflected by the information recording layer of the optical disc D passes through the optical disc D again, the object lens 124 and the λ/4 plate 123, is reflected by the polarizing beam splitter 122, passes through a condensing lens 125, and then enters a photodetector 127.

A light receiver of the photodetector 127 is usually divided into a plurality of portions, and currents are output in accordance with light intensities from the respective light receiver portions. The output currents are converted into voltages by an I/V amplifier (current voltage conversion) not shown, and then input into an arithmetic circuit 140. The input voltage signals are subjected to an arithmetical operation by the arithmetic circuit 140 to obtain signals such as tilt error signals, HF signals, focus error signals and track error signals. The tilt error signal performs tilt control, the HF signal performs the reproduction of the information recorded in the optical disc D, the focus error signal performs focus control, and the track error signal performs tracking control.

The object lens 124 can be driven in upward and downward directions, a disc radial direction and a tilt direction (a radial direction and/or a tangential direction) by an actuator 128, and can be controlled so as to follow an information track on the optical disc D by a servo driver 150. It is to be noted that the tilt direction include two types, and they are a "radial tilt" which occurs when a disc surface slants toward the center of the optical disc, and a "tangential tilt" which occurs in a tangential direction of the track. Of these tilts, the radial tilt is usually brought about by a warp of the disc. It is demanded to consider not only the tilt which simply occurs during the manufacture of the discs but also the tilt which occurs by a change with time and a rapid change of a given environment.

The use of such an optical disc device permits the reproduction of the optical disc of the invention. That is, in the optical disc which is applicable to the above optical disc device, the pointing direction of the tips (convexities) of the pit pattern of the layer faces the side of the reflection membrane, and the reflection membrane is constituted in the form of two layers. One layer which closely contacts the pit pattern is made of aluminum (or its alloy or its oxide), and the other layer is made of silver (or its silver alloy). The thus formed optical disc can be reproduced by the above optical disc device.

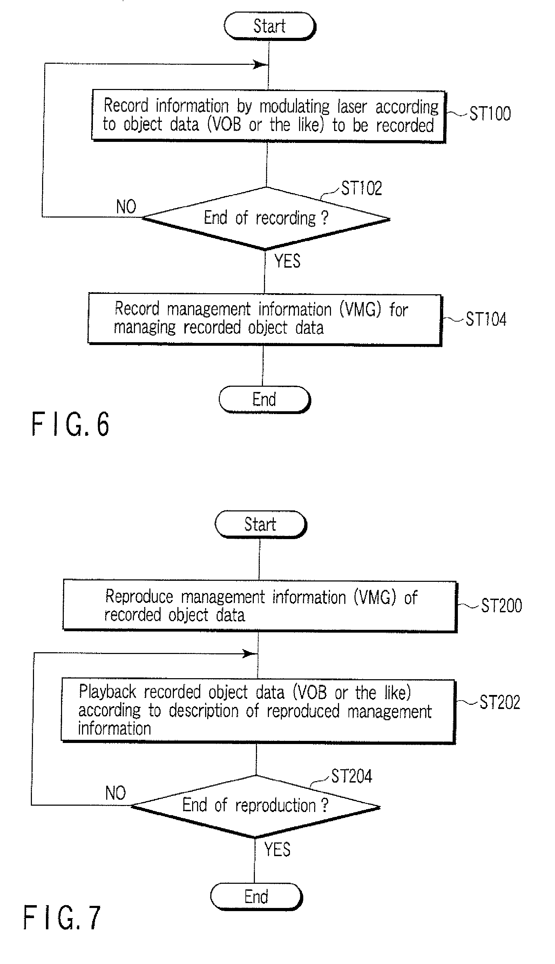

FIG. 6 is a flowchart explaining a recording method using the optical disc according to the embodiment. Modulated laser having a wavelength of, for example, 405 nm is applied to a recording target layer (Layer 0, Layer 1, or Layer 2 in FIG. 1) of the disc from an optical pickup of a disc drive (not shown here), thereby recording object data (VOB, etc., in DVDs or HD_DVDs) (ST 100). After the completion of this recording (ST 102Y), management information on the recorded object data (VMG, etc. in DVD or HD_DVD) is written in the disc (ST 104), such that one recording is finished.

FIG. 7 is a flowchart explaining a playback method using the optical disc according to the embodiment. The management information is read by laser having a wavelength of, for example, 405 nm from the disc in which the object data and the management information are recorded in the processing as in FIG. 6 (ST 200). The read management information is temporarily stored in a work memory of a playback device (not shown here). This playback device plays back the recorded object data with reference to information on a playback procedure in the stored management information, etc. (ST 202). The playback terminates when a user instructs to terminate the playback or when the playback has reached a point where the playback procedure information within the management information indicates the termination of the playback (ST 204Y).

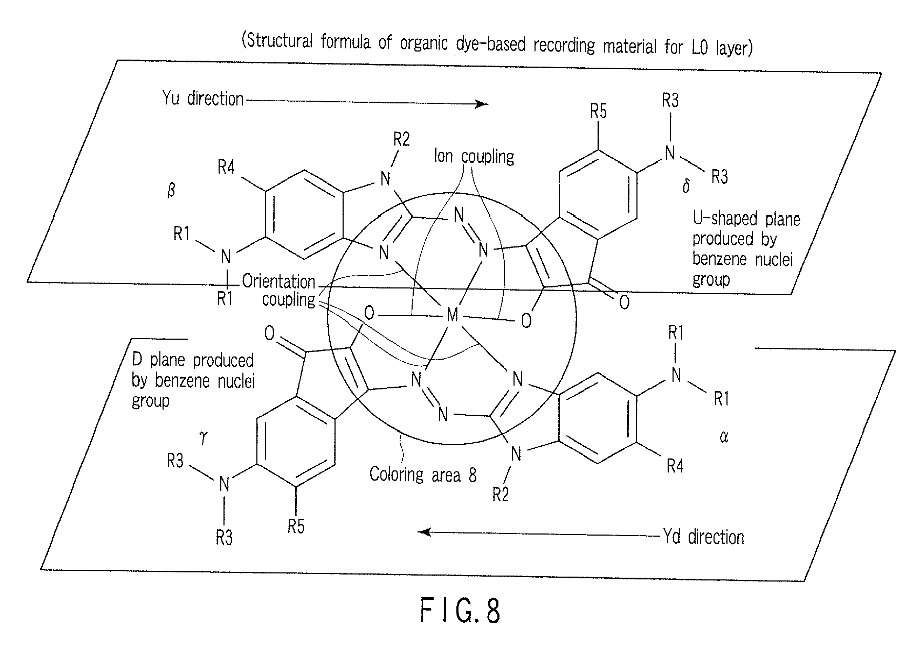

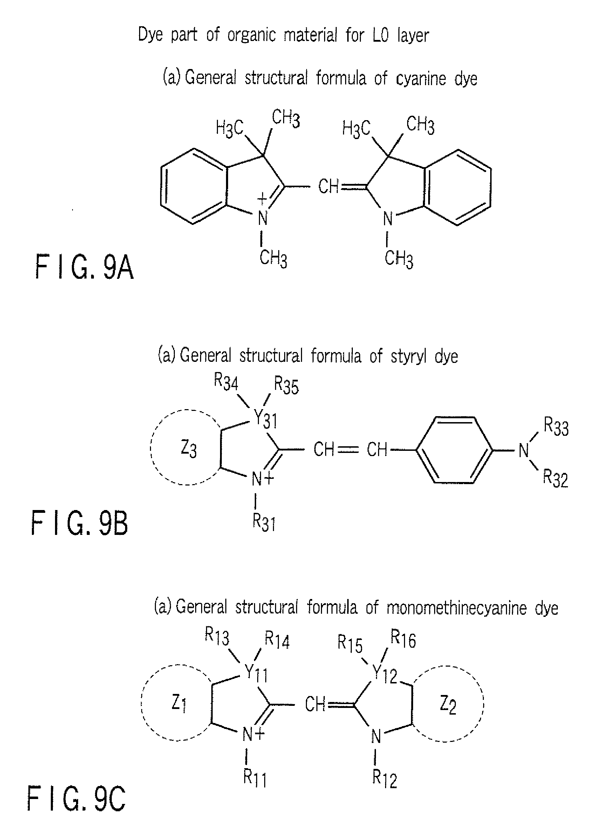

FIG. 8 shows a practical example of a metal complex part of the organic material for the recording layer (such as L0, L1, or L2 layer), and FIGS. 9A to 9C show practical examples of dye parts of the organic material for the recording layer. A circular surrounding area having central metal M of the azo metal complex shown in FIG. 8 as the center corresponds to coloring area 8. When a laser beam passes through coloring area 8, localized electrons within this coloring area 8 resonate with a change in magnetic field of the laser beam, and absorb energy of the laser beam. A value obtained by converting the frequency of the change in magnetic field at which the localized electrons resonate most and easily absorb the energy into the wavelength of the laser beam is represented by maximum absorbance wavelength λmax. Maximum absorbance wavelength λmax shifts toward the longer wavelength side with increasing length of coloring area 8 (resonance range) shown in FIG. 8. By substituting atoms of central metal M in FIG. 8, the localized range of localized electrons near central metal M (how central metal M can attract the localized electrons to the vicinity of the center) changes, and the value of maximum absorbance wavelength λmax changes. For example, by selecting a material having λmax near 405 nm, an organic material which has sensitivity (absorbance) at a wavelength of 405 nm can be obtained.

As a dye material for the recording layer having a light absorption at the wavelength of 405 nm, an organic dye material having a structure obtained by combining the organic metal complex part having a general structural formula shown in FIG. 8 and the dye material part shown in FIGS. 9A to 9C can be used. Central metal M of the organic metal complex can use cobalt or nickel (in addition, scandium, yttrium, titanium, zirconium, hafnium, vanadium, niobium, tantalum, chromium, molybdenum, tungsten, manganese, technetium, rhenium, iron, ruthenium, osmium, rhodium, iridium, palladium, platinum, copper, silver, gold, zinc, cadmium, mercury, and the like). As the dye material part, a cyanine dye, styryl dye, and monomethinecyanine dye, whose general structural formulas are shown in FIGS. 9A to 9C can be used.

Furthermore, as a dye material for the L1 or L1 layer having a light absorption not only at the wavelength of 405 nm (450 nm or less) but also within the range from 600 nm to 800 nm (or from 650 nm to 780 nm or from 680 nm to 780 nm), the following materials can be used. That is, a dye for CD-R or DVD-R which has a light absorption within the range from 600 nm to 800 nm (or from 650 nm to 780 nm or from 680 nm to 780 nm) is mixed to have the aforementioned dye material for the L0 layer as a base. As a result, the dye mixture can have a light absorption within the range from 600 nm to 800 nm (or from 650 nm to 780 nm or from 680 nm to 780 nm) in addition to that at the wavelength of 405 nm for data recording. As the dye for CD-R or DVD-R to be mixed for this purpose, known organic dye materials such as an azo dye, cyanine dye, phthalocyanine dye, and the like are available. As the mixing amount of that dye, for example, about 10 wt.% are practical.

## Claims

1. An optical disc in which information is recorded by a pit pattern and which includes a reflection membrane, **characterized in that** the reflection membrane is formed with a two-layer structure having a first layer (50) and a second layer (52) different from the first layer.

2. The optical disc according to claim 1, **characterized in that** the first layer (50) comes in direct contact with the pits, and the material of the first layer is aluminum, an aluminum alloy or aluminum oxide.

3. The optical disc according to claim 1, **characterized in that** the second layer (52) comes in contact with the first layer (50), and the material of the second layer (52) is silver or a silver alloy.

4. The optical disc according to claim 1, **characterized in that** an information recording layer having the reflection membrane (50+52) has a structure in which the reflection membrane is provided in a pointing direction of pit tips of the pit pattern.

5. The optical disc according to claim 1, **characterized in that** an information recording layer having the reflection membrane (50+52) is a layer (LO and/or L1) other than the deepest layer (e.g., L2) as seen from a laser light incident surface of the multilayer optical disc having two or more information recording layers, and the reflection membrane is semipermeable or semitransparent to the laser light.

6. The optical disc according to claim 1, **characterized in that** the thickness of the first layer (50) is equal to or less than that of the second layer (52) .

7. The optical disc according to claim 6, **characterized in that** the thickness of the first layer (50) is 10 nm or less, the total thickness of the first and second layers is 10 nm or more, and the thickness of the first layer (50) is equal to or less that that of the second layer (52).

8. The optical disc according to claim 3, **characterized in that** as the material of the second layer (52) of the reflection membrane, the silver is replaced with gold or a dielectric material.

9. An optical disc device which comprises:
a laser providing unit (120-124) configured to provide a laser light to an optical disc **characterized in that** information is recorded by a pit pattern and which includes a reflection membrane, the reflection membrane being formed with a two-layer structure having a first layer and a second layer different from the first layer,
a light receiving unit (125-127) configured to receive a reflected light of the laser light provided by the laser providing unit, and
a reproduction unit (140-150) configured to reproduce the optical disc by use of the reflected light received by the light receiving unit.

10. A method for reproducing an optical disc in which information is recorded by a pit pattern and which includes a reflection membrane, the reflection membrane being formed with a two-layer structure having a first layer and a second layer different from the first layer, the method **characterized by** comprising:
providing a laser light from the surface side of the optical disc to the side of the reflection membrane to reproduce (ST200-ST202) the information based on a pit pattern with a reflected laser light.
